# EUROPEAN PATENT SPECIFICATION

(11) **EP 1 176 897 B1**
(45) Date of publication and mention of the grant of the patent: **09.07.2003**
(21) Application number: 99916003.9
(22) Date of filing: 05.05.1999
(51) Int. Cl.: A47J 43/26

(54) **DEVICE, PROVIDED WITH EPICYCLICAL GEARING, FOR PROGRESSIVELY BREAKING THE WOODY EPICARP, PARTICULARLY OF THE DRUPE TYPE FRUITS**
VORRICHTUNG MIT PLANETENGETRIEBE ZUM SCHRITTWEISEN ÖFFNEN VON HÖLZERNEN SCHALEN, INSBESONDERE VON STEINFRÜCHTEN
DISPOSITIF POURVU D'UN SYSTEME D'ENGRENAGE EPICYCLIQUE, PERMETTANT DE CASSER PROGRESSIVEMENT L'EPICARPE LIGNEUX, NOTAMMENT DE FRUITS DE TYPE DRUPE

(43) Date of publication of application: 06.02.2002
(73) Proprietor: Raynard Associates Limited, Douglas IM99 1RZ, Isle of Man (GB)
(72) Inventor: TABONE, Jason Anthony, Laxey, Isle of Man (GB)
(74) Representative: D'Agostini, Giovanni, Dr.
(86) International application number: IB9900849
(87) International publication number: WO00067625

(56) References cited:
- WO-A-97/02779
- DE-A- 2 520 264
- DE-U- 29 617 966
- GB-A- 2 331 916

## Description

### Technical Field

The present invention has for object a device, provided with epicyclical gearing, for progressively breaking the woody epicarp (shell), particularly of the drupe type fruits.

The innovation, finds particular even if not exclusive application in the field of kitchen utensils and anyway in that category of domestic tools, of everyday use, not excluded the table furnishing.

### Background Art

Nut-crackers are known, as can be observed from documents WO 97 02799 A (Rossi Mario) (1997-01-30); DE 25 20 264 A (Fortunato Walter) (1976-01-22) and DE 296 17 966 U (Serocki Janusz) (1997-01-23).

The nut is for example known. A tasty fruit, especially in winter times and in the European Countries, it is mainly eaten when seasoned, or anyway when it has been subjected to drying processes, such to be classified among the dry fruits. Also hazelnuts and peanuts, almonds, as well as dates (not from palm tree) and also the macadamia nut mainly belong to this category.

A characteristic common to said fruits is that they are sold on the market in a particular condition, where, once the epicarp is eliminated, the hull, in the case of the nut, a strong woody epicarp (shell) remains which contains an edible pseudo-pulpy mesocarp, substantially dry, in this case, the kernel.

The particular shape and fibrous structure of the shell, gives the nut a fair mechanical resistance, such to force the customer, who wants to reach the kernel, to use a suitable tool, well known as nut-cracker.

Sometimes, for some categories of fruits, such as almonds, the epicarp, thanks to particular fibres, has such an exceptional mechanical strength that makes the traditional nut-cracker useless, thus forcing the customer, to resort to techniques which are empirical and sometimes even dangerous because of the inappropriateness and inexperience in using tools not intended for a domestic use, as is the case of vices and hammers.

Widely spread and used on the tables all over the world and practically always known, in different shapes, the nut-cracker belongs to that group of kitchen utensils which substantially maintained their structure unchanged. At the most there can be some variations, limited to the design, or alternatively some plastic materials are used, in place of the most common metallic ones. Neither the use of noble raw materials is excluded, whose utilization, as already seen, can be found in the field of furnishing.

A traditional type of nut-cracker, is essentially made up of two levers, specular, obtaining a sort of jaw, fulcrumed beyond the barycenter at a common end. Each lever, provides such a shape to be subdivided in two parts, respectively, a first one close to the hinging intended for clamping part of the fruit, and a second one which is part of the handle. Even more in detail, each lever may have in the fruit clamping area, a slightly arched shape, so that along the upper edge concerning the second part a comfortable, often knurled and rather wide gripping surface, is offered.

This, may generally be obtained also by adding some wrapping anti-skid plastic material. Along the internal side, respect to the two levers thus coupled, and in proximity of the hinging, each lever has an hemispheric shape, again one specular to the other, sometimes with a certain thickening, so that, once reapproached, they somewhat define the outline of a small size nut. Some variations, may provide the presence of a second hemisphere, obtained adjacent to the first one, generally of a smaller size, for allowing the breaking of the dry fruit shell having a smaller size than the previous ones. Finally, a rather raised toothing, may be obtained along the edge of both the clamping hemispheres, for obtaining a better clamping capacity, and thus a shell breaking.

The customer, in this case, having to use said accessory, shall:
a) at first, open the two levers, carrying out the operation by using two hands,
b) insert the nut in the suitable seat, while the nut-cracker is kept open with the other hand,
c) and then, reapproach the two levers up to holding the fruit steadily.

At this point by progressively increasing the force, the breaking of the shell or epicarp is obtained, up to the total reapproaching of the two opposite hemispheres.

The drawbacks of this solution are known. In first place, having to press the nut strongly, often makes the intensity of the force exerted difficult to be controlled, also because the shell breaks almost suddenly, so that the fast reapproachment of the two levers occurs.

This condition, in the best hypothesis, causes also a cracking of the kernel, which, being dry, tends to break in small pieces of pulp mixed with the shell fragments. At the end, the customer can do nothing else than select the edible parts one by one, throwing all the rest away.

Besides a considerable waste, the presently available domestic tools, do not allow to preserve the kernel unbroken, for example, as when it is necessary to garnish a cake, so it appears little functional also when the aesthetic result is considered.

A second drawback is that, the shells are sometimes really so resistant that they may cause a certain bending of the respective levers during the pressing phase, without obtaining any breaking. In such case, the customer resorts to the use of two hands, with the fingers open and opposite to one another, so to exert a greater force, as in the case of weaker subjects, as old people and women. In the end, the result is an even more uncontrolled cracking of the shell which breaks the kernel in many small pieces, with the possibility of wounding accidentally the unaware user.

A third but not least drawback consists of the excessive opening forced by the nutcracker, once the respective jaws have clamped the fruit. The difficulty of exerting the necessary force for breaking the shell appears therefore as a consequence, because it must be limited to the sole action of the fingers of one hand, substantially thumb-forefinger, without fully exploiting the palm. In case of people having small limbs, as children, the nut-cracking will be a difficult operation, because they shall use two hands, as above explained, otherwise, tending to bring the gripping close to the hinging, a very dangerous condition with the subsequent risk of accidents to the fingers will occur.

Recently, with the Italian application for an utility model n. TV95U000039 (Rossi), a device for progressively breaking the woody epicarp, particularly of the drupe type fruits, was proposed, aiming at solving the above mentioned problems. It comprises a double handle, of which a static and at least a dynamic one, the first one comprising on a side an essentially spoon shaped seat, for containing the fruit, longitudinally crossed by an opening; the second one, being fulcrumed to said first one by the interposition of a movable breaking blade, in which the blade provided with rack-like means is progressively inclinable by passing said spoon shaped seat, by a return, alternate to the release, of the dynamic handle which acts on an harpoon device resting on the blade engagement, said blade, also elastically returned to an original position, for eventually being disengaged by a second locking device provided along the static handle.

The thus proposed solution, represents with no doubt a fair progress if compared to the pre-existing solutions, solving many of the problems, however, it has still some deficiencies from the functionality point of view, mainly related to the progression in which the breaking blade or beak, falls on the nut underneath supported by the spoon shaped seat. The descent of the same, in fact, is not at all constant but it is characterized by small leaps, determined by the presence of a toothing in the progression mechanism on which a double harpoon device rests. As a consequence, the action of the blade, in the shell breaking phase, is again comprised between a stopping point and the following one, with a non predeterminable intermediate stroke, which, in case of a release of the handles forces the blade to return to the previous position. It is therefore understandable that, the cause of the nut shell breaking is not at all a specifically micrometrical progression, an element which can cause some difficulties in the breaking of particularly resistant shells.

This occurs because the customer, cannot release the handles at any moment, or the action will be ineffective, but he viceversa shall act on them until he feels, by sounds, the release action of the harpoon device, which advises him that the static position has been reached.

Secondly, the fact that the shell breaking may coincide with a (determined) position of the lowered blade is not a certain result, thus during the handles compression phase, it requires a certain modulation, in the blade time of action which elapses between a tooth and a following step, in order to avoid the excessive shell breaking with a subsequent excessive or insufficient breaking of the fruit. This intermediate result, on one side may cause the customer's dissatisfaction, because he was expecting a better result, on the other it may require the user, not having completed the breaking, a further, modulated, operation on the handle.

Purpose of this invention is also to obviate the above mentioned drawbacks.

This and other purposes are reached by the present innovation according to the characteristics as in the enclosed claims, by solving the mentioned problems by using a device, with epicyclical gearing, for progressively breaking the woody epicarp (shell), particularly of drupe type fruits, comprising two levers, elastically returning and hinged one to the other beyond the barycenter, so to provide a front part for a fruit shell breaking, and a back part which must be manually operated, consisting of corresponding gripping handles, in which, the front part comprises:
- a spoon shaped seat, integral with the lower handle, and an intermediate oscillating tongue, on which the nut rests, determining the locking of a means supporting the crown wheels which are perimetral to the hinging between said two levers;
- a breaking blade, above said spoon shaped seat, for acting in opposition being inclinable on the same and interacting with said two levers, being hinged to the same ones in intermediate position, comprising a crown, moved by said crown wheels;
- an upper handle, hinged to the lower handle, providing a pinion in a logic correspondence, keyed on the same, and able to allow the rotation of the crown wheels depending on the lower handle structure which in their turn move the racked crown integral with said breaking blade provided with elastic return means.

Thus, through the considerable creative contribution whose effect determines an important technical progress, different advantages are obtained. At first, the customer is allowed to optimize the correct shell breaking, for example, of the nut, by simply acting on the levers, without having to modulate his force exerted on the handle and without feeling, generally by sounds, the action of the breaking blade movement mechanism. In this case, in fact, the micrometric descent progression of the blade or beak resting on the shell, is particularly slight, being noticed only at sight, and allows to carry out the breaking action with the utmost precision without interfering, minimally, with the kernel, a fact that mainly preserves the structural integrity and therefore the original look.

Furthermore, by effect of the particular interaction of the levers with the epicyclical gearing, it is not necessary to exert any excessive force, resulting on one side usable also by the weakest subjects, on the other, particularly handy as well as easy to be gripped, even with a particularly resistant drupe structure.

These, and other advantages will appear from the following detailed description of a preferential embodiment solution with help of the enclosed schematic drawings whose execution details are not to be considered as limitative but only as examples.
Figure 1., shows a view of a nutcracker open on one side, with the portion relative to the hinging, particularly enhanced.
Figure 2., shows a top view of the nutcracker as in Figure 1., according to a section on horizontal plane, within the limits of the hinging and of the front part of the same.

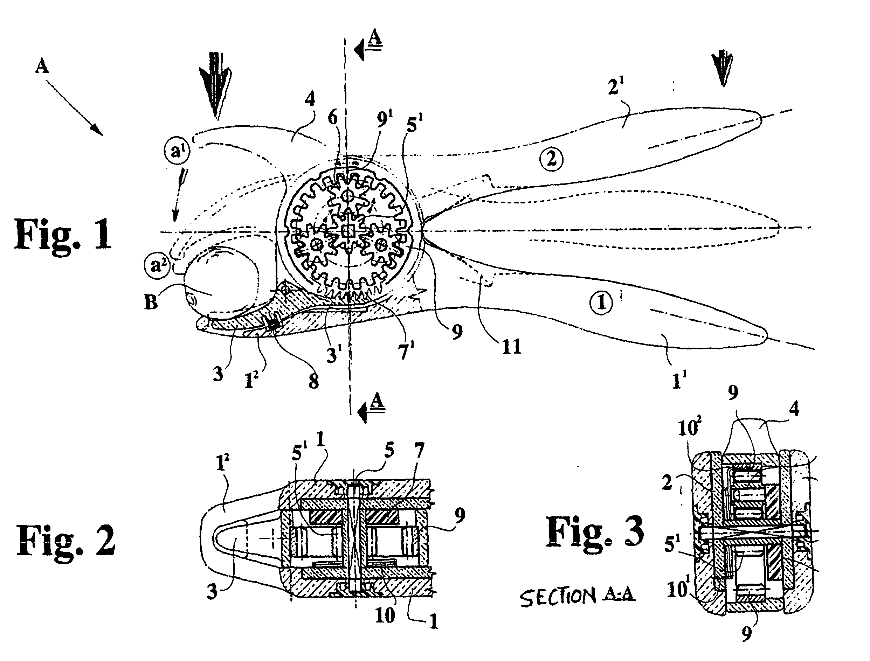

Finally, Figure 3., shows a further view of the nutcracker front portion, and in particular, of a section on vertical plane, according to the axis A-A of Figure 1.

### Description of a possible embodiment

Referring also to the figures, it can at first be noticed that a device (A) for breaking, progressively, the woody epicarp or the shell, particularly of drupe type fruits (B), essentially consists of two interacting levers (1,2), fulcrumed one on the other in a rather advanced position, beyond the barycenter, and comprising an elastic means (11) resting close by the hinge whose ends act on the intrados of said two levers (1,2).

Each of said two levers, in correspondence of a common side, and on the extrados of each, provides a large size gripping surface (11,21), which is the eventually anatomically shaped handle. On the other side, the lower lever (1), essentially static, provides a spoon shaped end (12), partially released at the centre, so to obtain a partial housing for the end of an oscillating tongue (3) fulcrumed on said lever (1). Said spoon shaped end (12), by the practical side, offer a convenient seat for partially housing the fruit (B) to be broken, which thus rests also on the oscillating tongue (3).

With regard to this latter, it is subdivided in a front portion provided with a series of ribs for easing its clamping, and a back portion, non visible, (31) which interferes with the hinging of said two levers (1,2).

The second lever (2), above the first one (1) is of the dynamic type, aiming at determining the movement of the breaking blade or beak (4) from a raised position (a1) to a lowered position (a2) and viceversa. More in detail, it, being fulcrumed to said first lever (1) beyond the barycenter, provides a small shaft (5) which in intermediate position (51), makes up a pinion.

Purpose of said pinion (51), is substantially that of determining the rotation of a crown wheel group, in this case three of them (6), which being made up of gearwheels are engaged to a disk (7), in its turn engaged on the axis (5). Said disk (7), on the lower part or along the perimclral edge, provides, developed along an arch portion, a series of teeth (71), on which the harpoon shaped part (31) is hooked to the oscillating tongue (3). This latter, comprises a return spring (8) housed inside of the projecting portion (12) of the lever (1), which, acting on the front and underlying part of the oscillating tongue (3) in correspondence of the portion pushed by the nut (B), allows to determine, when a contrasting force lacks, the disengagement of the harpoon (31) from the disk (7).

For what concerns the crown wheels (6), it is noticed that if on one side they are engaged by the pinion (51), on the other, they exert the corresponding rotation movement on a perimetral crown (9), which, for the outside part, comprises an end-piece, consisting of a breaking blade (4) integral with the perimetral crown (9). More in detail, it is noticed that said breaking blade (4), consists of a sort of an inclinable bent beak, for compressing the nut (B) supported by the spoon shaped seat (12) and provided along the intrados with a knurling suitable to ease the gripping. In order to allow the return of the breaking blade (4) from an inclined position (a2) to an original position, corresponding to a raised position (a1), sideways to said device (A) an elastic return helicoidal spring (10) is provided. More in particular, said spring (10), provides one end (101) fixed on the intrados of the lever structure (2), while the opposite end (102) is fixed into a recess (91) obtained perimetrally to the gearwheel (9). By the structural viewpoint, it is noticed that the epicyclical gearing group, in this case, remains substantially contained inside of two lateral shells which make up the hinging, as monolithic parts of the lower lever (1), and through which being the small shaft (5) passing the upper lever (2) and the breaking blade (4) are fulcrumed.

The device (A) functioning, occurs in the following way. The customer, by gripping the device (A) with one hand provides, with the other hand, to place the nut (B) on the spoon shaped seat (12), which in this case is not yet concerned by the breaking blade (4), being in a raised condition (a1). Thus, by using only the one hand which grips the device (A), he starts making a movement which approaches the two levers (1,2) opposing the force determined by a spring (3), consisting of an harmonic steel foil which rests on the specular intrados of said two levers (1,2). Such an action, forces the rotation of the pinion (51), integral with the lever (2) and contestually, the rotation of the crown wheels (6) depending on the lever (1), which transmit the relative movement, in such case, in counterclockwise direction, to the crown (9) integral with the breaking blade (4).

At first, it may occur that the nut (B) weight is not enough to determine the raising of the harpoon (31) up to engage the disk (7) which supports the crown wheels (6), without causing the progressive inclination of the breaking blade (4).

In this case, it will be sufficient to accompany said breaking blade (4) with the other hand up to a position (a2) allowing to this same to slightly rest on the nut (B) shell. This condition causes the stress of the oscillating tongue (3) and therefore the locking by the harpoon (31) of the disk-like support (7) and of the relative crown wheels (6). Once the nut (B) breaking is carried out, the lack of forces opposing the release effect of the spring (8) determines the disengagement of the harpoon (31) and consequently, the release of the crown wheels (6) which allow the return, by rotating in clockwise direction, of the crown (7) and of the respective breaking blade (4) to an original condition (a1).

## Claims

1. Device, with hinge-toothed gearing, for progressively breaking the woody epicarp, particularly of the drupe type fruits, comprising two levers, upper one and lower one (1,2) elastically returning and hinged one on the other in intermediate position beyond the barycenter, so to provide a front part aiming at breaking the shell of a fruit (B) with a breaking blade (4) on the upper and a seat on the lower one (1₂), and a back part which must be manually operated, consisting of corresponding gripping handles, **characterized in that**, said hinge-toothed gearing is an epicyclical gearing (5,6,9,9') and wherein the said front part comprises:
- a seat (12) integral with a lever (1), and an intermediate feeling means (3), on which the fruit (B) rests, determining the locking of a supporting means (7) of means (6) perimetral to the hinging between said two levers (1,2), the which means (6), set said breaking blade (4) in a motion perpendicular to said seat (12);
- said breaking blade (4), above said seat (1₂), aiming at acting in opposition being inclinable on the same and interacting with said two levers (1,2), integrally comprising, an engagement means (9) of said epicyclical gearing (5,6,9,9'), having satellite wheel-gearing intermediate means (6) on a supporting means (7);
- said upper lever (2), providing a central pinion (5₁), keyed on the same, and geared and able to allow the rotation of the said satellite wheel-gearing intermediate means (6) depending on the said lower lever structure (1) which in their turn move the said engagement means (9) integral with said breaking blade (4).

2. Device, according to claim 1., **characterized in that**, the said front part comprises:
- a spoon shaped seat (1₂) integral with the said lower lever (1), and an intermediate oscillating tongue (3), on which the nut (B) rests, determining the locking of said means (7) supporting the said satellite wheel-gearing intermediate crown wheels (6) which are perimetral to the hinging between said two levers (1,2);
- said breaking blade (4), above said spoon shaped seat (12), for acting in opposition being inclinable on the same and interacting with said two levers (1,2), comprising said crown (9), moved by said satellite wheel-gearing intermediate crown wheels (6);
- said upper lever (2), providing said pinion (5₁) in a logic correspondence, keyed on the same, and able to allow the rotation of the crown wheels (6) depending on the lower lever structure (1) which in their turn move the said engagement means as gear wheel (9) integral with said breaking blade (4) provided with elastic return means (10).

3. Device, according to claims 1 and 2., **characterized in that** the said upper lever (2), above said first one (1) is of the dynamic type, aiming at determining the movement of the said breaking blade or beak (4) from a raised position (a1) to a lowered position (a2) and viceversa.

4. Device, according to previous claims, **characterized in that** the front end (1₂) of the said lower lever (1), opposite to its handle (11), realizing said seat, provides a spoon shape (1₂), released at the centre, so to obtain a partial housing for the end of an oscillating tongue (3) fulcrumed on said lever (1).

5. Device, according to previous claims, **characterized in that** the said oscillating tongue (3) is made up of a front portion provided with a series of ribs for easing its clamping, and of a back portion, (31) which interferes with the hinging (5) of said two levers (1,2).

6. Device, according to previous claim, **characterized in that** the said hinging is realized by a small shaft (5) which in intermediate position makes up said pinion (51).

7. Device, according to previous claim, **characterized in that** the said pinion (5') engages three gear wheels in function of said satellite wheel-gearing intermediate crown wheels (6), which are engaged on a disk realizing said supporting means (7), in its turn engaged on the said axis (5).

8. Device, according to previous claims, **characterized in that** said disk (7), provides lowerly, along the perimetral edge, for an arch portion a series of teeth (7'), on which the harpoon-like part (3') of the oscillating tongue (3) is hooked.

9. Device, according to claims 4 and 5, **characterized in that** the said oscillating tongue (3) comprises a return spring (8) housed inside of the projecting portion (12) of the lower lever (1), which, acting on the front and underlying part of the oscillating tongue (3) in correspondence of the portion pushed by a nut (B), determines, when a contrasting force lacks, the disengagement of an harpoon (3') from the said disk (7).

10. Device, according to previous claims, **characterized in that** the said crown wheels (6), on one side are engaged by the said pinion (51), on the other, engage a said perimetral crown (9), which, for the outside part, comprises an end-piece, consisting of said breaking blade (4) integral with the said perimetral crown (9).

11. Device, according to previous claims, **characterized in that** the return of the said breaking blade (4) from an inclined position (a2) to an original position, corresponding to a raised position (a1), is obtained by an elastic return helicoidal spring (10), which provides one end (101) fixed on the intrados of the lever structure (2), while the opposite end (102) is fixed into a recess (91) obtained perimetrally to the said perimetral crown gear wheel (9).

12. Device, according to previous claims, **characterized in that** the said epicyclical gearing means (51,6,7,9), remains substantially contained inside of two side shells which make up the hinging, as monolithic parts of the said lower lever (1), and through which being the said small shaft (5) passing the said upper lever (2) and the breaking blade (4) are fulcrumed.

## Patentansprüche

1. Vorrichtung, mit gelenkig verbundenem Räderwerk zum Aufbrechen des holzigen Exokarps besonders von Steinfruchten, mit zwei Hebeln, einem oberen und einem unteren (1,2), die elastisch zurückfedern und aufeinander gelenkig verbunden sind, in mittlerer Lage jenseits des Schwerpunkts, so dass ein Vorderteil entsteht zum Aufbrechen der Schale einer Frucht (B) mit einem Brechmesser (4) auf dem oberen und einer Aufnahme auf dem unteren (12), sowie ein Hinterteil, das manuell betrieben werden muss, bestehend aus entsprechenden Griffen, **gekennzeichnet dadurch, dass** besagtes gelenkigige Räderwerk ein Planetengetriebe (5,6,9,9) ist, und wobei das besagte Vorderteil umfasst:
- eine Aufnahme (12), die einstückig mit einem Hebel (1) ist, und einen mittleren Fühler (3), auf welchem die Frucht (B) liegt, der die Schließung einer Stütze (7) für das Mittel (6) am Umfang der Gelenkverbindung zwischen den beiden Hebeln (1,2) festlegt, wobei die Mittel (6) besagtes Brechmesser (4) in eine Bewegung senkrecht zu besagter Aufnahme (12) versetzen;
- besagtes Brechmesser (4), oberhalb besagten Sitzes (12), zum Wirken in Gegenüberlage, ist darauf neigbar und wirkt mit den beiden Hebeln (1,2) zusammen, ist einstückig mit einem Eingriffsmittel (9) von besagtem Planetengetriebe (5,6,9,9), mit einem Zwischen-Satellitenräderwerk (6) auf einem Stützmittel (7);
- besagter oberer Hebel (2), mit einem zentralen Ritzel (51), das auf demselben verkeilt ist, mit Rädervorgelege, das die Rotation des besagten Satellitenräderwerk-Zwischenmittels (6) gestattet, abhängig von der besagten unteren Hebelstruktur (1), die ihrerseits die besagten Eingriffsmittel (9), die mit besagtem Brechmesser (4) einstückig sind, bewegen.

2. Vorrichtung nach Anspruch 1., **gekennzeichnet dadurch, dass** das besagte Vorderteil umfasst:
- eine löffelförmige Aufnahme (12), die einstückig mit dem besagten unteren Hebel (1) ist, und eine oszillierende Zwischenlasche (3), auf welcher die Nuss (B) liegt, die die Schließung von besagtem Mittel (7) bestimmt, das die Zwischen-Planräder (6) des Satellitengetriebes trägt, die am Umfang der Gelenkverbindung zwischen den beiden Hebeln (1,2) liegen;
- besagtes Brechmesser (4), oberhalb besagter löffelförmigen Aufnahme (12), ist zum Wirken in Gegenüberstellung darauf neigbar und wirkt mit den beiden Hebeln (1,2) zusammen, die besagtes Planrad (9) umfassen, bewegt durch besagte Satellitenräderwerk-Zwischenplanräder (6);
- besagter oberer Hebel (2) besitzt besagtes Ritzel (51) in logischer Korrespondenz, das darauf verkeilt ist und die Rotation der Planräder (6) gestattet, abhängig von der unteren Hebelstruktur (1), die ihrerseits das besagte Eingriffsmittel bewegen, als Zahnrad (9), das einstückig mit besagtem Brechmesser (4) mit elastischen Rückkehrmitteln (10) ist.

3. Vorrichtung nach Anspruch 1 und 2., **gekennzeichnet dadurch, dass** der besagte obere Hebel (2), oberhalb besagtem ersten (1), dynamisch ist und die Bewegung des besagten Bruchmessers oder Schnabels (4) von einer angehobenen Position (a1) zu einer abgesenkten Position (a2) und umgekehrt verursacht.

4. Vorrichtung nach den vorherigen Ansprüchen, **gekennzeichnet dadurch, dass** das Vorderende (12) des besagten unteren Hebels (1), gegenüber seinem Griff (11) gelegen, so dass besagte Aufnahme entsteht, Löffelform (12) aufweist, die in der Mitte freigesetzt ist, um eine teilweise Aufnahme für das Ende einer oszillierenden Lasche (3) zu erhalten, die ihren Hebelpunkt auf besagtem Hebel (1) hat.

5. Vorrichtung nach den vorherigen Ansprüchen, **gekennzeichnet dadurch, dass** besagte oszillierende Lasche (3) aus einem Vorderteil mit einer Reihe von Rippen zum leichteren Klemmen besteht, sowie aus einem Hinterteil (31), das mit der Gelenkverbindung (5) der beiden Hebel (1,2) zusammenwirkt.

6. Vorrichtung nach den vorherigen Ansprüchen, **gekennzeichnet dadurch, dass** besagte Gelenkverbindung durch eine kleine Welle (5) verwirklicht wird, die in Zwischenposition besagtes Ritzel (51) bildet.

7. Vorrichtung nach den vorherigen Ansprüchen, **gekennzeichnet dadurch, dass** das besagte Ritzel (5') in drei Zahnräder eingreift, abhängig von besagten Satelliten-Zwischen-Planrädern (6), die in eine Scheibe eingreifen, die besagte Stütze (7) bildet, die ihrerseits in besagte Achse (5) eingreift.

8. Vorrichtung nach den vorherigen Ansprüchen, **gekennzeichnet dadurch, dass** besagte Scheibe (7) unten, entlang der Umfangskante, ein Bogenteilstück lang eine Reihe von Zähnen (7') aufweist, an denen das harpunenähnliche Teil (3') der oszillierenden Lasche (3) angehakt ist.

9. Vorrichtung nach Anspruch 4 und 5, **gekennzeichnet dadurch, dass** die besagte oszillierende Lasche (3) eine Rückholfeder (8) umfasst, die in dem vorspringenden Teil (12) des unteren Hebels (1) untergebracht ist und auf die Vorderseite und den darunterliegenden Teil der oszillierenden Lasche (3) einwirkt, an dem Teilstück, das durch eine Nuss (B) geschoben wird, und die, wenn keine Gegenkraft vorhanden ist, eine Harpune (3') von der besagten Scheibe (7) abkuppelt.

10. Vorrichtung nach den vorherigen Ansprüchen, **gekennzeichnet dadurch, dass** besagte Planräder (6) auf einer Seite in das besagte Ritzel (51) eingreifen, auf der anderen in ein besagtes Umfangs-Planrad (9), das außen ein Endstück aufweist, bestehend aus besagtem Brechmesser (4), das mit besagtem Umfangs-Planrad (9) einstückig ist.

11. Vorrichtung nach den vorherigen Ansprüchen, **gekennzeichnet dadurch, dass** die Rückkehr des
besagte Brechmessers (4) aus einer geneigten Position (a2) in einer Ausgangsposition, entsprechend einer angehobenen Position (a1), durch eine elastische schraubenförmige Rückholfeder (10) erreicht wird, die ein Ende (101) aufweist, das am Innenbogen der Hebelstruktur (2) befestigt ist, während das gegenüberliegende Ende (102) in einer Vertiefung (91) am Umfang des besagten Umfangsplanrads (9) befestigt ist.

12. Vorrichtung nach den vorherigen Ansprüchen, **gekennzeichnet dadurch, dass** besagtes Planetengetriebe (51,6,7,9) im wesentlichen in zwei Seitengehäusen verbleibt, die die gelenkige Verbindung bilden, als monolithische Teile des besagten unteren Hebels (1), der als Hebelpunkt für die besagte kleine Welle (5) dient, die durch besagten oberen Hebel (2) hindurchgeht, und für das Brechungsmesser (4).

## Revendications

1. Dispositif, avec engrenage articulé denté, pour rompre progressivement l'épicarpe boisé, particulièrement des fruits du type de drupes, comprenant deux leviers, un supérieur et un inférieur (1,2) retournant de façon elastique et articulé l'un sur l'autre en position intermédiaire au-delà du barycentre, pour fournir une partie frontale ayant pour but la rupture de la coquille d'un fruit (B) avec une lame de rupture (4) sur le levier supérieur et un logement sur le levier inférieur (12), et une partie arrière laquelle doit être opérée manuellement, consistant de poignées de saisie correspondantes, **caractérisé en ce que** ledit engrenage articulé denté est un engrenage épicycloïdal (5,6,9,9) dont la partie frontale comprend:
- un logement (12) intégral avec un levier (1), et un senseur intermédiaire (3), sur lequel le fruit (B) repose, déterminant le blocage d'un moyen de support (7) du moyen (6) périmetriquement à la charnière entre lesdits deux leviers (1,2), lesquels moyens (6) mettent ladite lame de rupture (4) en un mouvement perpendiculaire audit logement (12);
- ladite lame de rupture (4), au-dessus dudit logement (12), avec le but d'agir en opposition, étant inclinable sur le même et faisant intéraction avec lesdits deux leviers (1,2), comprenant intégralement un moyen d'engrènement (9) dudit engrenage épicycloïdal (5,6,9,9), ayant des satellites intermédiaires à engrenage à roues (6) sur un moyen de support (7);
- ledit levier supérieur (2) foumit un aileron centrale (51), clavetté sur le même, et engrené et capable de permettre la rotation dudit satellite intermédiaire à engrenage à roues (6) selon ladite structure de levier inférieur (1), lesquelles de leur part déplacent lesdits moyens d'engrènement (9) intégraux avec ladite lame de rupture (4).

2. Dispositif selon la revendication 1., **caractérisé en ce que** la ladite partie frontale comprend:
- un logement à forme de cuillère (12) intégral avec ledit levier inférieur (1), et une langue oscillante intermédiaire (3), sur laquel la noix (B) repose, déterminant le blocage desdits moyens (7) qui supportent lesdits satellites intermédiaires à engrenage à roue plate
(6) lesquels sont périmetriques à la charnière entre lesdits deux leviers (1,2);
- ladite lame de rupture (4), au-dessus dudit logement à forme de cuillère (12), pour agir en opposition, étant inclinable sur le même et faisant intéraction avec lesdits deux leviers (1,2), comprenant ladite couronne (9), bougé par lesdits satellites intermédiaires à engrenage à roue plate (6);
- ledit levier supérieur (2), qui fournit ledit aileron (51) dans une correspondance logique, clavetté sur le même, et capable de permettre la rotation de la roues plates (6) selon la structure du levier inférieur (1), lesquelles de leur part déplacent lesdits moyens d'engrènement en tant que roues dentées (9) intégrales avec ladite lame de rupture (4) pourvue de moyens de retour élastique (10).

3. Dispositif selon les revendications 1 et 2., **caractérisé en ce que** ledit levier supérieur (2), au-dessus dudit premier (1), est du type dynamique, pour déterminer le mouvement de ladite lame de rupture ou bec (4) d'une position élevée (a1) à une position abaissée (a2) et vice versa.

4. Dispositif selon les revendications précédentes, **caractérisé en ce que** l'extrémité antérieure (12) du dudit levier inférieur (1), opposé à sa poignée (11), réalisant ledit logement, pourvoit une forme de cuillère (12), libéré au centre, pour obtenir un logement partiel pour l'extrémité d'une langue oscillante (3) appuyé sur ledit levier (1).

5. Dispositif selon les revendications précédentes, **caractérisé en ce que** ladite langue oscillante (3) est composé d'une partie antérieure pourvue d'une série de nervures pour faciliter son serrage, et d'une partie arrière, (31) qui interfère avec la charnière (5) desdits deux leviers (1,2).

6. Dispositif selon les revendications précédentes, **caractérisé en ce que** ladite charnière est réalisée par un petit arbre (5) lequel en position intermédiaire compose ledit aileron (51).

7. Dispositif selon les revendications précédentes, **caractérisé en ce que** ledit aileron (5) engrène trois roues dentées en fonction desdits satellites intermédiaires à engrenage à roue plate (6), lesquels sont engrenés sur un disque réalisant lesdits moyens de support (7), de sa part engrené sur ledit axe (5).

8. Dispositif selon les revendications précédentes, **caractérisé en ce que** ledit disque (7) pourvoit inférieurement, le long du bord périmetrique, pour une partie d'arc une série de dents (7), sur lesquels la partie du type de harpon (3) de la langue oscillante (3) est accrochée.

9. Dispositif selon les revendications 4 et 5, **caractérisé en ce que** ladite langue oscillante (3) comprend un ressort de retour (8) logé à l'intérieur de la partie projetante (12) du levier inférieur (1), lequel, en agissant sur la partie antérieure et celle en dessous de la langue oscillante (3) près de la partie poussé par une noix (B), détermine, quand une force contrastante manque, le désengagement d'un harpon (3) dudit disque (7).

10. Dispositif selon les revendications précédentes, **caractérisé en ce que** lesdites roues plates (6) d'un côté sont engrenées par ledit aileron (51), de l'autre engrènent une dite couronne périmetrique (9), laquelle, à l'extérieur, comprend une pièce d'extrémité, qui consiste de ladite lame de rupture (4) intégrale avec ladite couronne périmetrique(9).

11. Dispositif selon les revendications précédentes, **caractérisé en ce que** le retour de ladite lame de rupture (4) d'une position inclinée (a2) à une position originale, qui correspond à une position élevée (a1), est obtenu par un ressort hélicoïdal de retour élastique (10), lequel pourvoit une extrémité (101) fixé sur l'intrados de la structure de levier (2), tandis que l'extrémité opposée (102) est fixée dans un enfoncement (91) obtenu périmetriquement à ladite roue plate périmetrique (9).

12. Dispositif selon les revendications précédentes, **caractérisé en ce que** ledit moyen d'engrenage épicycloïdal (51,6,7,9), reste substantiellement contenu à l'intérieur de deux coquilles latérales qui forment la charnière, en tant que des parties monolithiques dudit levier inférieur (1), et à travers lequel ledit petit arbre (5) qui passe ledit levier supérieur (2) et la lame de rupture (4) sont appuyés.
